# EUROPEAN PATENT APPLICATION

(11) **EP 4 772 394 A1**
(43) Date of publication of application: **08.07.2026**
(21) Application number: 24864512.9
(22) Date of filing: 04.09.2024
(51) Int. Cl.: B60N 2/42, B60N 2/26, B60N 2/28

(54) **SIDE COLLISION BLOCK STRUCTURE AND CHILD SAFETY SEAT**

(30) Priority: 11.09.2023 CN 202322490239 U
(71) Applicant: Ningbo Baby First Baby Products Co., Ltd., Ningbo, Zhejiang 315412 (CN)
(72) Inventor: WANG, Youping, Ningbo, Zhejiang 315412 (CN); DONG, Xinda, Ningbo, Zhejiang 315412 (CN)
(74) Representative: Lorenz Seidler Gossel Part. mbB
(86) International application number: PCT/CN2024/116817
(87) International publication number: WO 2025/055792

(57) **Abstract**

Disclosed are a side impact block structure and a child safety seat including the same. The side impact block structure includes a side impact block base configured to be mounted on a side surface of a child safety seat and a side impact block body detachably connected to the side impact block base. The side impact block body is provided with a buckling portion. The side impact block base is provided with a coupling portion configured to receive insertion of the buckling portion. The buckling portion is configured to fit with the coupling portion to enable the side impact block body to be engaged with and fixed to the side impact block base after rotating about an axis of the side impact block base. The side impact block structure further includes a limiting portion. The limiting portion is configured to limit the buckling portion, to restrict rotation of the buckling portion about the axis of the side impact block base after the side impact block body is engaged with and fixed to the side impact block base. As such, the buckling portion is prevented from rotating to detach from the coupling portion when the vehicle bumps during driving, thereby improving the reliability of rotational engagement between the buckling portion and the coupling portion.

## Description

### TECHNICAL FIELD

The present invention relates to the technical field of child safety seats, and particularly to a side impact block structure and a child safety seat including the same.

### BACKGROUND

A child safety seat is generally secured to a seat of a vehicle by a seat belt or an International Standards Organization FIX (ISOFIX) interface to ensure that the child safety seat will not be thrown forward when the vehicle has an accident such as rear-end collision. However, when the vehicle encounters a side collision, neither the seat belt nor the ISOFIX interface can prevent the child safety seat from lateral movement. Therefore, it is necessary to equip the child safety seat with a side impact protection device to prevent lateral movement.

Generally, side impact protection devices in the prior art are fixedly mounted on the child safety seat and cannot be removed and replaced according to the needs of the user; or the connection structure between the side impact protection device and the child safety seat is complicated, making it cumbersome and difficult for the user to mount or remove the side impact protection device. As a result, the side impact protection devices are inconvenient to use.

### SUMMARY

An objective of the present invention is to provide a side impact block structure to solve the problem of cumbersome and difficult operations required for mounting an existing side impact protection device to a safety seat or removing an existing side impact protection device from a safety seat.

Another objective of the present invention is to provide a child safety seat including the side impact block structure.

To achieve the above objectives, the following technical solution is adopted in the present invention. A side impact block structure is provided, including a side impact block base configured to be mounted on a side surface of a child safety seat and a side impact block body detachably connected to the side impact block base, where the side impact block body is provided with a buckling portion, the side impact block base is provided with a coupling portion configured to receive insertion of the buckling portion, the buckling portion is configured to fit with the coupling portion to enable the side impact block body to be engaged with and fixed to the side impact block base after rotating about an axis of the side impact block base, the side impact block structure further includes a limiting portion, and the limiting portion is configured to limit the buckling portion, to restrict rotation of the buckling portion about the axis of the side impact block base after the side impact block body is engaged with and fixed to the side impact block base.

Preferably, the side impact block base includes a mounting end surface configured for contact with the child safety seat and a limiting end surface configured for contact with the side impact block body, a mounting cavity is hollow and is provided between the mounting end surface and the limiting end surface, the limiting end surface is provided with a mounting port in communication with the mounting cavity, the coupling portion includes the mounting cavity and the mounting port, and the buckling portion is configured to be inserted into the mounting cavity through the mounting port and is configured to rotate in the mounting cavity about the axis of the side impact block base, to achieve a rotational engagement of the buckling portion with the coupling portion.

Preferably, the buckling portion includes a guiding portion extending in an axial direction of the side impact block body and a retaining portion extending in a radial direction of the side impact block body, a shape of the retaining portion matches a shape of the mounting port, and after the buckling portion is inserted into the coupling portion and rotated, the retaining portion is out of alignment with the mounting port, and the retaining portion interlocks with the limiting end surface to prevent the retaining portion from detaching from the mounting cavity.

Further preferably, when the retaining portion is rotated to an engaged and fixed position, the retaining portion is in interference fit with the mounting cavity.

Further, the limiting portion is arranged in the coupling portion or on the buckling portion.

Further, an annular side wall is formed around the mounting cavity, the limiting portion is arranged on the annular side wall, and the limiting portion is configured to engage with the retaining portion, to restrict rotation of the retaining portion about the axis of the side impact block base under an external force not exceeding a preset value.

Further, the limiting portion includes two limiting protrusions, and the two limiting protrusions are symmetrically arranged on the annular side wall with respect to an axis of the annular side wall.

Further, the limiting portion includes a connection slot and a connection block, the connection slot is provided on the limiting end surface, the connection block is arranged on the retaining portion, and when the buckling portion is rotationally engaged with the coupling portion, the connection block is engaged with the connection slot, to restrict rotation of the retaining portion about the axis of the side impact block base under an external force not exceeding a preset value.

Further, a pushing block is further arranged at a bottom of the mounting cavity adjacent to the mounting end surface, the pushing block is arranged facing the mounting port, the pushing block is configured to be elastically deformed to continuously apply a force to push the retaining portion in the mounting cavity toward the side impact block body, to push the retaining portion out of the mounting cavity or press the retaining portion against the limiting end surface.

Another aspect of the present invention provides a child safety seat including the side impact block structure described above.

Compared with the prior art, the present invention has the following advantages.

The side impact block structure provided by the present invention includes a side impact block body and a side impact block base. A buckling block configured to engage with a buckling port on the side impact block base is arranged on the side impact block body. The buckling port includes an opening provided on an end surface of the side impact block base and a mounting cavity in the side impact block base. After the buckling block on the side impact block body is inserted into the mounting cavity in the side impact block base through the opening, the side impact block body is rotated about an axis of the side impact block base, so that the buckling block is out of alignment with the opening and cannot be moved out of the mounting cavity through the opening, i.e., the side impact block body is rotationally engaged with and fixed to the side impact block base through the engagement of the buckling block with the buckling port. In addition, the side impact block structure further includes a limiting portion. The limiting portion is arranged on the buckling block or the buckling port. The limiting portion is configured to restrict rotation of the buckling block about the axis of the side impact block base under an external force not exceeding a preset value. As such, when the vehicle bumps during driving, the buckling block is prevented from rotating to detach from the opening, which will otherwise cause the side impact block body to detach from the side impact block base, failing to provide side impact protection for the child safety seat.

### BRIEF DESCRIPTION OF THE DRAWINGS

FIG. 1 is a schematic exploded view of a side impact block structure according to the present invention.
FIG. 2 is a schematic diagram of a side impact block body in the side impact block structure according to the present invention.
FIG. 3 is a side view of the side impact block body in the side impact block structure according to the present invention.
FIG. 4 is a three-dimensional schematic structural diagram of a side impact block base in the side impact block structure according to the present invention.
FIG. 5 is a schematic diagram of one side of a mounting end surface of the side impact block base in the side impact block structure according to the present invention.
FIG. 6 is a cross-sectional view of the side impact block base in the side impact block structure according to the present invention.
FIG. 7 is a three-dimensional schematic structural diagram of the side impact block structure when a retaining portion is aligned with a mounting port according to the present invention.
FIG. 8 is a cross-sectional view of the side impact block structure when the retaining portion is aligned with the mounting port according to the present invention.
FIG. 9 is a three-dimensional schematic structural diagram of the side impact block structure when the retaining portion is out of alignment with the mounting port according to the present invention.
FIG. 10 is a cross-sectional view of the side impact block structure when the retaining portion is out of alignment with the mounting port according to the present invention.

In the drawings, the reference numerals respectively represent: 100. side impact block structure; 200. side impact block base; 210. coupling portion; 220. limiting end surface; 221. mounting port; 230. mounting end surface; 240. mounting cavity; 250. annular inner wall; 260. pushing block; 300. side impact block body; 310. buckling portion; 311. guiding portion; 312. retaining portion; 400. limiting portion; 410. limiting protrusion; 420. connection slot.

### DETAILED DESCRIPTION OF THE EMBODIMENTS

The present invention will be further described below through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

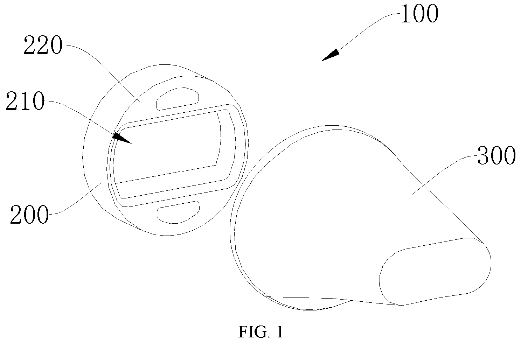

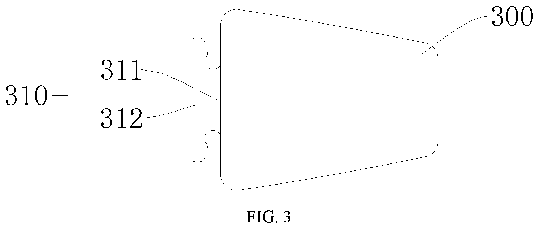

As shown in FIG. 1 to FIG. 4, the present invention provides a side impact block structure 100 applicable to a child safety seat. The side impact block structure 100 includes a side impact block base 200 configured to be preset on a side surface of the child safety seat and a side impact block body 300 detachably connected to the side impact block base 200. The side impact block body 300 is provided with a buckling portion 310. The side impact block base 200 is provided with a coupling portion 210 configured to receive insertion of the buckling portion 310. The buckling portion 310 is configured to fit with the coupling portion 210 to enable the side impact block body 300 to be engaged with and fixed to the side impact block base 200 after rotating about an axis of the side impact block base 200. As such, a rotational engagement connection is achieved between the side impact block body 300 and the side impact block base 200, and a user can mount or remove the side impact block body 300 by rotating the side impact block body 300 with a hand. Therefore, the mounting of the side impact block body 300 to the side impact block base 200 and the removal of the side impact block body 300 from the side impact block base 200 are simplified, and the efficiency of mounting and removing the side impact block structure 100 is improved.

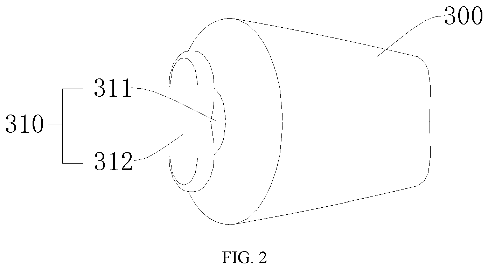

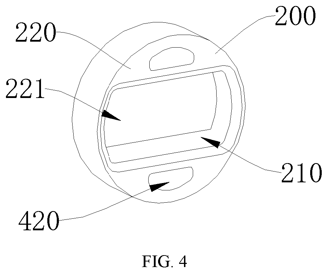

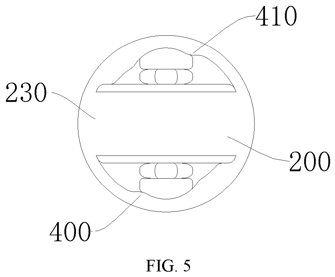

Specifically, as shown in FIG. 4 to FIG. 5, the side impact block base 200 includes a mounting end surface 230 configured for contact with the child safety seat and a limiting end surface 220 configured for contact with the side impact block body 300. The side impact block base 200 is a cylindrical structure with a hollow interior. A mounting cavity 240 configured to receive the buckling portion 310 is provided between the limiting end surface 220 and the mounting end surface 230. The limiting end surface 220 is provided with a mounting port 221 in communication with the mounting cavity 240. The mounting port 221 is oblong-shaped. The buckling portion 310 is configured to be inserted into the mounting cavity 240 through the mounting port 221. As shown in FIG. 2 to FIG. 3, the buckling portion 310 includes a guiding portion 311 extending in an axial direction of the side impact block body 300 and a retaining portion 312 extending in a radial direction of the side impact block body 300. The retaining portion 312 is arranged at an end of the guiding portion 311 away from the side impact block body 300. A shape of the retaining portion 312 matches a shape of the mounting port 221. The retaining portion 312 is configured to be inserted into the mounting cavity 240 through the mounting port 221 and is configured to rotate about the axis of the side impact block base 200 within an angle range. For example, when the retaining portion 312 is rotated by 90° about the axis of the side impact block base 200, the retaining portion 312 is out of alignment with the mounting port 221, so that the retaining portion 312 can be prevented from detaching from the mounting cavity 240 through the mounting port 221, thereby ensuring that the side impact block body 300 can be fixedly mounted on the side impact block base 200. It should be noted that the retaining portion 312 is in interference fit with the mounting cavity 240, which can improve the reliability of rotational engagement and fixation between the coupling portion 210 and the buckling portion 310, to prevent the buckling portion 310 from detaching from the coupling portion 210 to cause the side impact block body 300 to fall off from the side impact block base 200 when the vehicle bumps during driving.

Definitely, the shape of the mounting port 221 and the shape of the retaining portion 312 are not limited to an oblong shape, but may also be other shapes such as an oval shape or a triangle shape. The shape of the mounting port 221 and the shape of the retaining portion 312 are not limited as long as the retaining portion 312 can be rotated out of alignment with the mounting port 221. As such, when the retaining portion 312 tends to detach from the mounting cavity 240, the retaining portion 312 interlocks with the limiting end surface 220 to prevent the retaining portion 312 from detaching from the mounting cavity 240, so that the side impact block body 300 can be firmly mounted on the side impact block base 200.

In some other embodiments, the coupling portion 210 includes a first coupling surface and a recessed surface recessed inward from the first coupling surface, a first annular side wall is formed between the first coupling surface and the recessed surface, and two or more first locking tenons are evenly arranged on the first annular side wall; and the buckling portion 310 includes a second coupling surface and a protruding surface protruding outward from the second coupling surface, a second annular side wall is formed between the second coupling surface and the protruding surface, two or more second locking tenons are evenly arranged on the second annular side wall, a distance between two neighboring first locking tenons in a circumferential direction of the first annular side wall is greater than or equal to a length of the second locking tenon in a circumferential direction of the second annular side wall, and a distance between two neighboring second locking tenons in the circumferential direction of the second annular side wall is greater than or equal to a length of the first locking tenon in the circumferential direction of the first annular side wall. As such, after the buckling portion 310 is inserted into the coupling portion 210 and rotated, the first locking tenons respectively interlock with the second locking tenons, and the first coupling surface is in contact with the second coupling surface, so that the side impact block body 300 can be rotationally engaged with and fixed to the side impact block base 200.

It should be noted that the positions of the coupling portion 210 and the buckling portion 310 can be interchanged with each other, i.e., the coupling portion 210 may be arranged on the side impact block body 300, and the buckling portion 310 may be arranged on the side impact block base 200.

The side impact block structure 100 provided by the present invention further includes a limiting portion 400. The limiting portion 400 is configured to limit the buckling portion 310, to restrict rotation of the buckling portion 310 about the axis of the side impact block base 200 after the side impact block body 300 is engaged with and fixed to the side impact block base 200. The limiting portion 400 may be arranged in the coupling portion 210 or on the buckling portion 310.

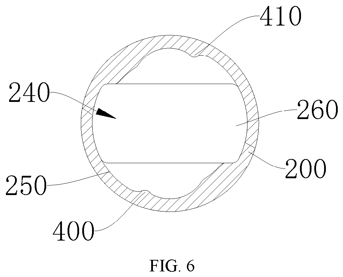

As shown in FIG. 6, in some embodiments, an annular inner wall 250 is formed around the mounting cavity 240, the limiting portion 400 is arranged on the annular inner wall 250, the limiting portion 400 specifically includes two limiting protrusions 410, the two limiting protrusions 410 are symmetrically arranged on the annular inner wall 250 with respect to an axis of the annular inner wall 250, a line connecting the two limiting protrusions 410 forms an angle with the mounting port 221, and the angle is 90°. Definitely, the specific value of the angle is not limited in this embodiment, and the angle of 90° is merely an example embodiment.

The limiting protrusions 410 are configured to engage with the retaining portion 312, so that the retaining portion 312 can be locked under an external force not exceeding a preset value, and the retaining portion 312 cannot rotate about the axis of the side impact block base 200 into alignment with the mounting port 221. As such, the retaining portion 312 is prevented from rotating when the vehicle bumps during driving, thereby improving the reliability of rotational engagement between the buckling portion 310 and the coupling portion 210. In addition, in the process of the buckling portion 310 being rotated to be engaged with and fixed to the coupling portion 210, the retaining portion 312 presses against the limiting protrusions 410 and slides over a surface of each of the limiting protrusions 410 into a fixed position. When the retaining portion 312 slides into place after scraping past the limiting protrusions 410, an audible click is produced as a feedback to the user, for the user to judge whether the buckling portion 310 has been properly engaged with and fixed to the coupling portion 210.

In some other embodiments, as shown in FIG. 2 to FIG. 4, the limiting portion 400 includes two connection slots 420 and two connection blocks, the two connection slots 420 are respectively provided on two sides of the mounting port 221 on the limiting end surface 220, the two connection blocks are arranged on a side of the retaining portion 312 adjacent to the limiting end surface 220, and positions of the two connection slots 420 correspond one-to-one to positions of the two connection blocks. After the buckling portion 310 is inserted into the coupling portion 210 and rotated to be engaged with and fixed to the coupling portion 210, the connection slots 420 are respectively engaged with the connection blocks, so that the retaining portion 312 can be locked under an external force not exceeding a preset value, i.e., the retaining portion 312 will not rotate about the axis of the side impact block base 200 under a small force. As such, during the use of the side impact block structure 100, when the vehicle bumps during driving, the retaining portion 312 is prevented from rotating about the axis of the side impact block base 200 into alignment with the mounting port 221 to cause the retaining portion 312 to detach from the mounting cavity 240 through the mounting port 221, which will otherwise cause the side impact block body 300 to detach from the side impact block base 200, failing to provide side impact protection for the child safety seat. Similarly, at the moment when the connection slots 420 are engaged with the connection blocks, a feedback is also provided to the user, for the user to judge whether the buckling portion 310 has been properly engaged with and fixed to the coupling portion 210.

In the above embodiments, a pushing block 260 is further arranged at a bottom of the mounting cavity 240 adjacent to the mounting end surface 230. The pushing block 260 is configured to be elastically deformed to continuously apply a force to push the retaining portion 312 in the mounting cavity 240 toward the side impact block body 300, to press the retaining portion 312 against the limiting end surface 220 and increase the friction force between the retaining portion 312 and the limiting end surface 220. As such, the retaining portion 312 will not rotate unless a sufficiently large force is applied, and the reliability of rotational engagement between the side impact block body 300 and the side impact block base 200 is improved. The pushing block 260 is further configured to push the retaining portion 312 out of the mounting cavity 240 upon a rotation of the retaining portion 312 into alignment with the mounting port 221, thereby realizing automatic ejection of the retaining portion 312, making it convenient for the user to remove the side impact block body 300.

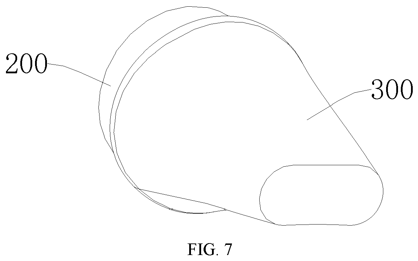

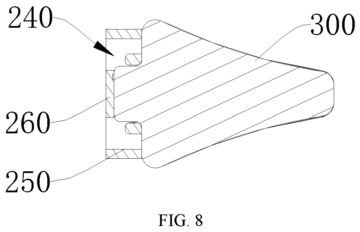

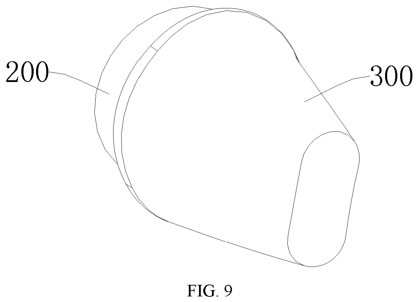

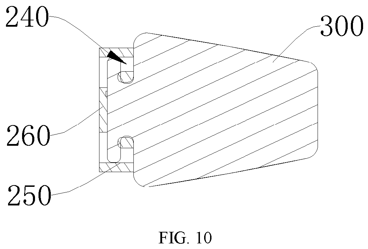

The working principle of the side impact block structure 100 is as follows. As shown in FIG. 2 to FIG. 4, FIG. 9, and FIG. 10, the buckling portion 310 on the side impact block body 300 is inserted into the mounting cavity 240 through the mounting port 221 on the side impact block base 200, and then the side impact block body 300 is rotated, so that the retaining portion 312 on the buckling portion 310 is out of alignment with the mounting port 221, and is engaged with and limited by the limiting end surface 220. In this case, the retaining portion 312 cannot be moved out of the opening on the side impact block base 200. In other words, the side impact block body 300 can be rotationally engaged with the side impact block base 200 by the engagement of the retaining portion 312 with the limiting end surface 220, and thus can be fixedly mounted to a side portion of the child safety seat to provide side impact protection for the child safety seat. As shown in FIG. 2 to FIG. 4, FIG. 7, and FIG. 8, to remove the side impact block body 300, the buckling portion 310 is rotated, so that the retaining portion 312 is rotated into alignment with the mounting port 221. In this case, the retaining portion 312 can be moved out of the mounting port 221, so that the side impact block body 300 is disengaged from the side impact block base 200. Thus, the side impact block body 300 is removed from the child safety seat.

In addition, the limiting portion 400 is further arranged on the side impact block body 300 or the side impact block base 200. The limiting portion 400 can limit the buckling portion 310, so that the buckling portion 310 can be locked under an external force not exceeding a preset value, to prevent the retaining portion 312 on the buckling portion 310 from rotating about the axis of the side impact block base 200. As such, when the vehicle bumps during driving, the retaining portion 312 is prevented from rotating about the axis of the side impact block base 200 into alignment with the mounting port 221 to cause the buckling portion 310 to detach from the coupling portion 210, which will otherwise cause the side impact block body 300 to detach from the side impact block base 200, failing to provide side impact protection for the child safety seat.

Another aspect of the present invention provides a child safety seat, which includes the side impact block structure 100 of any one of the above embodiments. The side impact block structure 100 is provided on each of two sides of the child safety seat, to provide side impact protection for the child safety seat.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. A side impact block structure, comprising a side impact block base configured to be mounted on a side surface of a child safety seat and a side impact block body detachably connected to the side impact block base, **characterized in that**, the side impact block body is provided with a buckling portion, the side impact block base is provided with a coupling portion configured to receive insertion of the buckling portion, the buckling portion is configured to fit with the coupling portion to enable the side impact block body to be engaged with and fixed to the side impact block base after rotating about an axis of the side impact block base, the side impact block structure further comprises a limiting portion, and the limiting portion is configured to limit the buckling portion, to restrict rotation of the buckling portion about the axis of the side impact block base after the side impact block body is engaged with and fixed to the side impact block base.

2. The side impact block structure of claim 1, **characterized in that** the side impact block base comprises a mounting end surface configured for contact with the child safety seat and a limiting end surface configured for contact with the side impact block body, a mounting cavity is hollow and is provided between the mounting end surface and the limiting end surface, the limiting end surface is provided with a mounting port in communication with the mounting cavity, the coupling portion comprises the mounting cavity and the mounting port, and the buckling portion is configured to be inserted into the mounting cavity through the mounting port and is configured to rotate in the mounting cavity about the axis of the side impact block base, to achieve a rotational engagement of the buckling portion with the coupling portion.

3. The side impact block structure of claim 2, **characterized in that** the buckling portion comprises a guiding portion extending in an axial direction of the side impact block body and a retaining portion extending in a radial direction of the side impact block body, a shape of the retaining portion matches a shape of the mounting port, and after the buckling portion is inserted into the coupling portion and rotated, the retaining portion is out of alignment with the mounting port, and the retaining portion interlocks with the limiting end surface to prevent the retaining portion from detaching from the mounting cavity.

4. The side impact block structure of claim 3, **characterized in that** when the retaining portion is rotated to an engaged and fixed position, the retaining portion is in interference fit with the mounting cavity.

5. The side impact block structure of any one of claims 3 to 4, **characterized in that** the limiting portion is arranged in the coupling portion or on the buckling portion.

6. The side impact block structure of claim 5, **characterized in that** an annular side wall is formed around the mounting cavity, the limiting portion is arranged on the annular side wall, and the limiting portion is configured to engage with the retaining portion, to restrict rotation of the retaining portion about the axis of the side impact block base under an external force not exceeding a preset value.

7. The side impact block structure of claim 6, **characterized in that** the limiting portion comprises two limiting protrusions, and the two limiting protrusions are symmetrically arranged on the annular side wall with respect to an axis of the annular side wall.

8. The side impact block structure of claim 5, **characterized in that** the limiting portion comprises a connection slot and a connection block, the connection slot is provided on the limiting end surface, the connection block is arranged on the retaining portion, and when the buckling portion is rotationally engaged with the coupling portion, the connection block is engaged with the connection slot, to restrict rotation of the retaining portion about the axis of the side impact block base under an external force not exceeding a preset value.

9. The side impact block structure of claim 8, **characterized in that** a pushing block is further arranged at a bottom of the mounting cavity adjacent to the mounting end surface, the pushing block is arranged facing the mounting port, the pushing block is configured to be elastically deformed to continuously apply a force to push the retaining portion in the mounting cavity toward the side impact block body, to push the retaining portion out of the mounting cavity or press the retaining portion against the limiting end surface.

10. A child safety seat, **characterized by** comprising the side impact block structure of any one of claims 1 to 9.
